# EUROPÄISCHE PATENTSCHRIFT

(11) **EP 3 498 977 B1**
(45) Veröffentlichungstag und Bekanntmachung des Hinweises auf die Patenterteilung: **19.08.2020**
(21) Anmeldenummer: 18211310.0
(22) Anmeldetag: 10.12.2018
(51) Int. Cl.: F01D 9/00, F01D 25/14, F01D 25/16, F01D 25/24, F01D 25/26

(54) **GEHÄUSEANORDNUNG FÜR EINE STRÖMUNGSMASCHINE SOWIE STRÖMUNGSMASCHINENANORDNUNG MIT EINER SOLCHEN GEHÄUSEANORDNUNG UND VERFAHREN ZUM HERSTELLEN DER GEHÄUSEANORDNUNG**
HOUSING ARRANGEMENT FOR A TURBOMACHINE AND FLOW MACHINE ASSEMBLY WITH SUCH A HOUSING ARRANGEMENT AND METHOD FOR PRODUCING THE HOUSING ARRANGEMENT
SYSTÈME DE BOÎTIER POUR UNE TURBOMACHINE AINSI QUE SYSTÈME DE TURBOMACHINE DOTÉ D'UN TEL SYSTÈME DE BOÎTIER ET PROCÉDÉ DE FABRICATION DU SYSTÈME DE BOÎTIER

(30) Priorität: 18.12.2017 DE 102017223112
(43) Veröffentlichungstag der Anmeldung: 19.06.2019
(73) Patentinhaber: MTU Aero Engines AG, 80995 München (DE)
(72) Erfinder: Kempinger, Georg, 85386 Eching (DE); Berger, Johann, 85368 Moosburg (DE); Grahnert, René, 82194 Gröbenzell (DE); Dieker, Johannes, 46399 Bocholt (DE); Mulorz, Tanya, 80997 München (DE); Martinez-Lozano, Laura, 82110 Germering (DE)

(56) Entgegenhaltungen:
- EP-A1- 3 203 036
- US-A- 4 457 568

## Beschreibung

Die vorliegende Erfindung betrifft eine Gehäuseanordnung für eine Strömungsmaschine gemäß Anspruch 1, eine Strömungsmaschinenanordnung mit einer solchen Gehäuseanordnung und ein Verfahren zum Herstellen einer solchen Gehäuseanordnung für eine Strömungsmaschine.

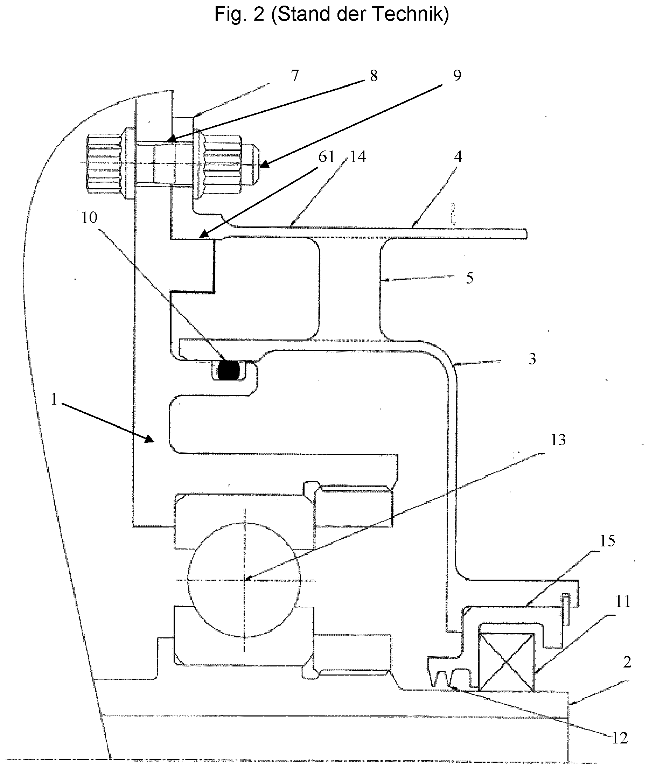

Fig. 2 zeigt eine schematische Strömungsmaschinenanordnung eines betriebsinternen Stands der Technik mit einer Gehäuseanordnung gemäß dem Oberbegriff von Anspruch 1. Eine ähnliche Strömungsmaschinenanordnung wird im Triebwerk GEnx© verwendet. Diese Gehäuseanordnung weist ein Trägerelement 1 auf, das eine Welle 2 über ein Lager 13, das insbesondere als ein Radiallager ausgebildet ist, lagert. Die Gehäuseanordnung weist ferner ein am Trägerelement 1 zentriertes Gehäuse 14 auf, das aus einem Innengehäuse 3 und einem am Trägerelement 1 befestigten Außengehäuse 4 besteht. Das Innengehäuse 3 und das Außengehäuse 4 sind durch zumindest eine Verbindungsstrebe 5 miteinander verbunden. Das Außengehäuse 4 hat einen Bolzenflansch 7 mit einem Durchgangsloch 8 zur Aufnahme einer Schraube 9 zur Herstellung einer Schraube-Mutter-Verbindung, durch die das Außengehäuse 4 an dem Trägerelement 1 befestigt ist. Direkt unter dem Durchgangsloch 8 ist das Außengehäuse 4 mittels einer Presspassung 61 an dem Trägerelement 1 zentriert und befestigt. Dadurch können das Innen- und Außengehäuse relativ leicht montiert und bei einem Wartungsvorgang wieder auseinander genommen werden. In einem auf eine Wellenachse bezogenen radial in etwa mittleren Bereich zwischen der Presspassung 61 und der Wellenachse befindet sich eine fliegende Dichtung mit einem O-Ring 10, der für eine Abdichtung zwischen dem Innengehäuse 3 und dem Trägerelement 1 sorgt. Ferner ist eine Wellendichtung 11, 12 zwischen dem Innengehäuse 3 und der Welle 2 vorgesehen, die für eine Abdichtung zwischen dem Innengehäuse 3 und der Welle 2 sorgt.

EP 0 976 481 B1 beschreibt ferner, wie O-Ringe bei einer Bearbeitungsmaschine verwendet werden können. Als weiterer Stand der Technik kann auf den Bericht der NASA "*Report to the President, By the Presidential Comission on the Space Shuttle Challenger Accident*" verwiesen werden, der eine Verformung eines O-Ringes beschreibt.

Aus der US 4 457 568 A ist eine Lagerstützstruktur in einem Gasturbinentriebwerk mit einer Stützstruktur bekannt, die an dem äußeren Gehäuse des Triebwerks angebracht ist, wobei die Struktur einen ringförmigen Sitz definiert, der konzentrisch zu einer rotierenden Welle ist. In dem so gebildeten Ringsitz sitzt eine zylindrische solide Hülse, die sich auskragend axial davon erstreckt und mit einer äußeren Lagerlaufbahn für Wälzlager versehen ist, wobei die äußere Laufbahn unrund ausgebildet ist, so dass, wenn die Lagerstruktur in die äußere Laufbahn eingesetzt wird, sie eine kreisförmige Form annimmt, die eine Last auf die Rollenlager aufbringt. Für eine Gehäuse- und Strömungsmaschinenanordnung sind vielfältige Anforderungen zu erfüllen, was insbesondere die Dichtheit, die Fertigungskomplexität, das Gewicht und die Herstellungskosten anbelangt. Eine Aufgabe der vorliegenden Erfindung ist es, eine Dichtfunktion an der Schnittstelle zum Lagergehäuse einer Gehäuse- und Strömungsmaschinenanordnung sowie eine Rundheit an der dichtungstragenden Struktur zu verbessern, die Fertigung zu erleichtern und deren Kosten zu reduzieren.

Diese Aufgabe wird durch eine Gehäuseanordnung mit den Merkmalen des Anspruchs 1, eine Strömungsmaschinenanordnung mit den Merkmalen des Anspruchs 11 und ein Verfahren zum Herstellen einer Gehäuseanordnung für eine Strömungsmaschine gemäß den Merkmalen des Anspruchs 12 gelöst. Vorteilhafte Ausführungsformen der Erfindung sind Gegenstand der Unteransprüche.

Nach einem Aspekt der vorliegenden Erfindung umfasst die erfindungsgemäße Gehäuseanordnung für eine Strömungsmaschine, wie zum Beispiel ein Flugzeugtriebwerk, ein Trägerelement, das dazu konfiguriert ist, einenends eine Welle der Strömungsmaschine zu lagern, und anderenends an einem Gehäuse, an dem das Trägerelement zentriert ist, durch eine Flanschverbindung, insbesondere durch eine Schraubverbindung, befestigt zu sein. Die Lagerung der Welle erfolgt vorzugsweise durch ein Lager, bevorzugt durch ein Radiallager, wobei das Trägerelement ein Lagergehäuse des Lagers trägt, welches an dem Trägerelement durch eine Schraubscheibe festgelegt ist. Das Gehäuse weist ein Innengehäuse, welches insbesondere einen ersten, inneren Ölraum begrenzt, und ein am Trägerelement befestigtes Außengehäuse, welches insbesondere einen zweiten, äußeren Ölraum begrenzt, auf. Das Innengehäuse und das Außengehäuse sind durch ein Verbindungsmittel, insbesondere zumindest eine Verbindungsstrebe, strukturell miteinander verbunden. In dem inneren Ölraum befindet sich das für die Schmierung des Lagers vorgesehene Öl. Der äußere Ölraum dient unter anderem zur Aufnahme des aufgrund eventueller Leckagen austretenden Öls aus dem inneren Ölraum. Zwischen dem äußeren Ölraum und einem Strömungshauptpfad der Strömungsmaschine sind weitere Dichtungen vorgesehen, die aber in der vorliegenden Anmeldung nicht weiter beschrieben werden. Zwischen dem Trägerelement und dem Innengehäuse ist eine Presspassung vorgesehen, um das Innengehäuse an dem Trägerelement zu zentrieren. Indem die Presspassung sowie die Zentrierung nicht, wie beim Stand der Technik, am oder nah zu dem Außengehäuse vorgesehen sind, sondern radial nach innen zum Innengehäuse vorschoben wurden, dürfen die Toleranzen im Flanschbereich weitaus höher ausfallen. Die Presspassung ist vorzugsweise in einem radial inneren Bereich zwischen dem Lager und dem Außengehäuse vorgesehen, ganz besonders bevorzugt erstreckt sich dieser Bereich in radialer Richtung über zwei Drittel der radialen Erstreckung des Trägerelements zwischen dem Lager und dem Außengehäuse und/oder der Flanschverbindung, und noch weiter bevorzugt erstreckt sich dieser Bereich in radialer Richtung über die Hälfte der radialen Erstreckung des Trägerelements zwischen dem Lager und dem Außengehäuse und/oder der Flanschverbindung. Hierdurch wird erreicht, dass sich der Presssitz in radialer Richtung stabilisierend auf das Gehäuse auswirkt, dessen Abstützpunkte so noch verteilter in radialer Richtung angeordnet sind. Durch den Presssitz wird direkt das Innengehäuse am Trägerelement zentriert, was auch unmittelbare Auswirkungen auf die Dichtelemente hat. Eine Leckage wird aufgrund der Zentrierung bei gleichen Toleranzen in diesem Bereich deutlich reduziert. Damit werden die Dichtfunktion an der Schnittstelle zum Lagergehäuse sowie die Rundheit an der dichtungstragenden Struktur verbessert.

Die Presspassung befindet sich in axialer Richtung besonders vorzugsweise mittig zwischen der Flanschanbindung des Gehäuses an dem Trägerelement und dem Lager. Dadurch wird eine axiale Schwingung des Trägerelements reduziert.

Vorzugsweise hat das Außengehäuse zur Herstellung der Flanschverbindung einen Bolzenflansch mit einem Durchgangsloch zur Aufnahme einer Schraube, durch die das Außengehäuse an dem Trägerelement befestigt ist, wobei das Durchgangsloch an einer Position angeordnet ist, die sich bezogen auf eine Wellenachse radial außerhalb der Presspassung befindet. Dadurch wird die Zentrierung mittels des Presssitzes von der Schraubenbefestigung entkoppelt. Indem die Zentrierung mittels der Presspassung radial innerhalb der Schraubenbefestigung angeordnet ist, können größere Toleranzen für die Presspassung verwendet werden, ohne dass die Dichtheit beeinträchtigt wird. Darüber hinaus kann die Rundheit der dichtungstragenden Gehäuseschale im Betrieb verbessert werden, und die Dichtspalte und die Verpressung an einem O-Ring können verringert werden, was wiederum die Dichtheit verbessert. Die Kombination der am Außengehäuse vorgesehenen Schraubverbindung und der davon radial beabstandeten Presspassung am Innengehäuse führt insgesamt zu einem stabileren Sitz des Innen- und Außengehäuse am Trägerelement.

Vorzugsweise hat das Trägerelement eine äußere Mantelfläche, insbesondere an einer Außenseite in axialer Richtung hervorstehenden Rippe an dem Trägerelement, und das Innengehäuse hat eine innere Mantelfläche, insbesondere an einer Innenseite einem dem Trägerelement zugewandten Endabschnitt des Innengehäuses, zwischen denen die Presspassung vorgesehen ist. Besonders bevorzugt ist der Endabschnitt des Innengehäuses verstärkt und/oder verdickt, um einen höheren Anpressdruck der Presspassung widerstehen zu können. Die Presspassung erfolgt an einer Umfangsfläche, die in axialer Richtung parallel zu der Wellenachse der Strömungsmaschine verläuft. Weiter bevorzugt oder alternativ hat das Trägerelement einen eine Wellenachse umlaufenden Flansch, an dem die äußere Mantelfläche vorgesehen ist, und das Innengehäuse hat einen die Achse der Welle umlaufenden Flansch, an dem die innere Mantelfläche vorgesehen ist. Damit kann die Presspassung einfach und mit hoher Genauigkeit hergestellt werden.

Vorzugsweise ist in einem Bereich der Presspassung zwischen dem Trägerelement und dem Innengehäuse ein Dichtmittel, insbesondere ein O-Ring, zur Abdichtung zwischen dem Trägerelement und dem Innengehäuse angeordnet. Der Bereich der Presspassung erfüllt damit neben der Zentrierung eine weitere Funktion zur Abdichtung.

Vorzugsweise ist zwischen dem Innengehäuse und der Welle eine Wellendichtung, insbesondere eine Labyrinthdichtung, angeordnet. Die Wellendichtung wird auf diese Weise über das Innengehäuse zentriert. Auch in diesem Fall können höhere Toleranzen bezüglich der Wellendichtung verwendet werden, da die wesentliche Zentrierung mittels der Presspassung im Vergleich mit dem Stand der Technik radial nach innen verschoben wurde.

Vorzugsweise ist das Verbindungsmittel, insbesondere die zumindest eine Verbindungsstrebe, derart elastisch, dass sich das Innengehäuse und das Außengehäuse unterschiedlich thermisch ausdehnen können. Das Außengehäuse ist im Betrieb üblicherweise hohen Temperaturen ausgesetzt, die gegenüber dem ölführenden Innenraum im Innengehäuse deutlich erhöht sind. Die dadurch entstandene Temperaturdifferenz verursacht eine unterschiedliche Ausdehnung der Bauteile. Um dem zusätzlich entgegenzuwirken, kann das Verbindungsmittel, insbesondere die Verbindungsstrebe, zumindest teilelastisch ausgebildet sein, beispielsweise durch eine relativ geringe Wandstärke oder durch Einsatz eines weichen Materials.

Die eingangs genannte Aufgabe der vorliegenden Erfindung wird gleichsam durch eine Strömungsmaschinenanordnung gelöst, die die Gehäuseanordnung und die im Trägerelement mittels eines Lagers gelagerte Welle aufweist.

Die eingangs genannte Aufgabe der vorliegenden Erfindung wird gleichsam durch ein Verfahren zum Herstellen einer Gehäuseanordnung für eine Strömungsmaschine, insbesondere Flugzeugtriebwerk, gelöst, das die folgenden Schritte aufweist: Herstellen eines Trägerelements, das dazu konfiguriert ist, eine Welle zu lagern; Herstellen eines Gehäuses mit einem Innengehäuse und einem Außengehäuse, die durch ein Verbindungsmittel, insbesondere zumindest eine Verbindungsstrebe, miteinander verbunden werden; und Zentrieren des Innengehäuses an dem Trägerelement mittels einer Presspassung zwischen dem Innengehäuse und dem Trägerelement.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Gehäuse- und Strömungsmaschinenanordnung nach einer Ausführung der vorliegenden Erfindung; und
- Fig. 2: eine Gehäuse- und Strömungsmaschinenanordnung nach dem Stand der Technik.

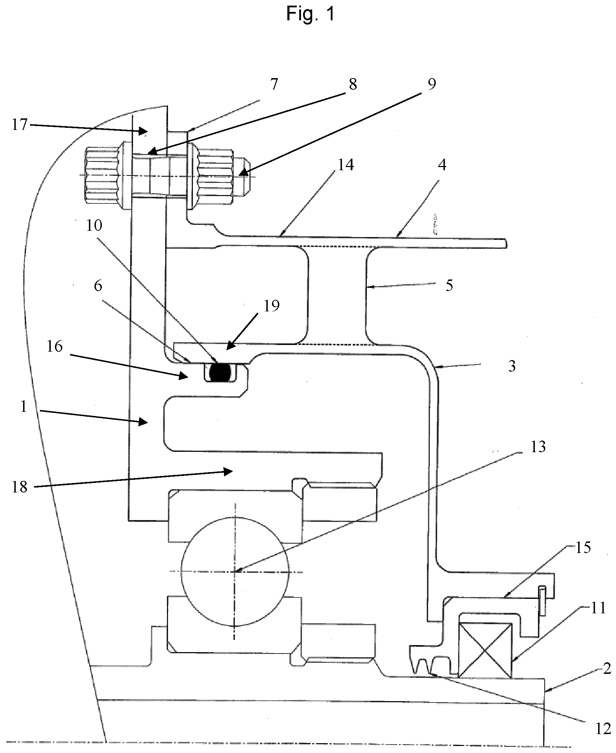

Fig. 1 zeigt eine Gehäuse- und Strömungsmaschinenanordnung nach einer Ausführung der vorliegenden Erfindung. Die Gehäuse- und Strömungsmaschinenanordnung ist Bestandteil einer Strömungsmaschine, wie zum Beispiel eines Flugzeugtriebwerks. Die Gehäuseanordnung hat ein Trägerelement 1, das dazu konfiguriert ist, eine Welle 2 zu lagern. Das Trägerelement 1 hat einen ersten Abschnitt 17, der im Wesentlichen vertikal zu einer Achse der Welle 2 ausgerichtet ist, und radial innerhalb davon einen zweiten Abschnitt 18, der die Welle 2 umläuft. In dem zweiten Abschnitt 18 des Trägerelements 1 ist ein Lager 13 vorgesehen, das die Welle 2 lagert. Im gegenwärtigen Ausführungsbeispiel ist das Lager 13 als Rollenlager ausgebildet.

Die Gehäuseanordnung hat ferner ein Gehäuse 14, das am Trägerelement 1 zentriert ist. Das Gehäuse 14 besteht aus einem Innengehäuse 3 und einem am Trägerelement 1 befestigten Außengehäuse 4, die durch zumindest eine Verbindungsstrebe 5 miteinander verbunden sind. Zwischen dem Trägerelement 1 und dem Innengehäuse 3 ist eine Presspassung 6 vorgesehen, um das Innengehäuse 3 an dem Trägerelement 1 zu zentrieren.

Das Außengehäuse 4 weist einen Bolzenflansch 7 mit einem Durchgangsloch 8 zur Aufnahme einer Schraube 9 auf, durch die das Außengehäuse 4 an dem Trägerelement 1 befestigt ist, wobei das Durchgangsloch 8 an einer Position angeordnet ist, die sich bezogen auf eine Achse der Welle 2 radial außerhalb der Presspassung 6 befindet. Der Bolzenflansch 7 liegt an dem ersten Abschnitt 17 des Trägerelements 1 an, welcher im Wesentlichen vertikal zu einer Achse der Welle 2 ausgerichtet ist.

Das Trägerelement hat 1 eine äußere Mantelfläche, und das Innengehäuse 3 hat eine innere Mantelfläche, zwischen denen die Presspassung 6 vorgesehen ist. Das Trägerelement 1 weist dabei einen eine Achse der Welle 2 umlaufenden Flansch 16 auf, an dem die äußere Mantelfläche vorgesehen ist. Das Innengehäuse 3 weist dabei einen die Achse der Welle 2 umlaufenden Flansch 19 auf, an dem die innere Mantelfläche vorgesehen ist.

Bezogen auf die Achse der Welle 2 befindet sich die Befestigung des Außengehäuses 4 am Trägerelement 1 mittels des Bolzenflansches 7 an einer radial äußeren Relativposition, die Presspassung 6 befindet sich an einer radial mittleren Relativposition, und der zweite Abschnitt 18 des Trägerelements 1 zur Aufnahme des Lagers 13 befindet sich an einer radial inneren Relativposition. Dadurch können die Fertigungstoleranzen im Bereich der Flansche 16, 19 weitaus höher ausfallen als bei dem Stand der Technik, da sich die Nennmaße verkleinert haben. Genauer gesagt wurde die Presspassung 61 aus dem Stand der Technik durch die erfindungsgemäße Presspassung 6 ersetzt, die radial weiter innen angeordnet ist und damit einen kleineren Radius aufweist.

Die Kombination der am Außengehäuse 4 vorgesehenen Schraubverbindung 9 und der davon radial beabstandeten Presspassung 6 am Innengehäuse 3 führt, im Vergleich mit dem vorstehend beschriebenen Stand der Technik, insgesamt zu einem stabileren Sitz des Gehäuses 14 am Trägerelement 1. Darüber hinaus sind die Montage und die Demontage des Gehäuses 14 vom Trägerelement 1 relativ einfach, da das Gehäuse 14 zunächst über die Presspassung 6 an das Trägerelement 1 zentriert wird. Danach kann das Gehäuse 14 durch die Schraube 9 an das Trägerelement 1 geschraubt werden. Ein nochmaliges Zentrieren des Durchgangslochs 8 des Außengehäuses 4 an ein im Trägerelement 1 vorgesehenes Durchgangsloch ist dabei nicht erforderlich.

In einem Bereich der Presspassung 6 zwischen dem Trägerelement 1 und dem Innengehäuse 3 ist ein O-Ring 10 zur Abdichtung zwischen dem Trägerelement 1 und dem Innengehäuse 3 vorgesehen ist. Es hat sich herausgestellt, dass die Verpressung des O-Rings 10 in der Presspassung 6 in der Praxis unproblematisch ist. Ferner ist am Innengehäuse 3 eine Wellendichtung 11, 12 für die Welle 2 angeordnet. Die Wellendichtung 11, 12 ist im gegenwärtigen Ausführungsbeispiel durch eine Gleitringdichtung 11 und eine Spaltdichtung 12 gebildet. Die Wellendichtung 11, 12 ist in einer Dichtungsaufnahme 15 aufgenommen. Die Dichtungsaufnahme 15 besteht aus einem am Außengehäuse 4 ausgebildeten Flansch, der die Achse der Welle 2 umläuft.

Die zumindest eine Verbindungsstrebe 5 ist derart elastisch, dass sich das Innengehäuse 3 und das Außengehäuse 4 unterschiedlich thermisch ausdehnen können. Dies kann zum Beispiel durch eine relativ dünne Wandstärke der Verbindungsstrebe 5 oder durch den Einsatz eines relativ weichen Materials für die Verbindungsstrebe 5 erreicht werden. Im Bereich der Presspassung 6 ist in der Regel keine Relativverschiebung zwischen dem Trägerelement 1 und dem Innengehäuse 3 möglich. Jedoch ist radial oberhalb der Presspassung 6 eine Relativverschiebung zwischen dem Trägerelement 1 und dem Innengehäuse 3 möglich, da die Verbindungsstrebe 5 die entsprechende Elastizität hat. Radial unterhalb der Presspassung 6 ist eine Relativverschiebung zwischen dem Innengehäuse 3 und der Welle 2 ebenfalls möglich, da die Wellendichtung 11,12 bezüglich der Welle 2 im gewissen Umfang axial verschiebbar ist.

Ein Ausführungsbeispiel einer Strömungsmaschinenanordnung besteht aus der vorstehend beschriebenen Gehäuseanordnung und der im Trägerelement 1 mittels des Lagers 13 gelagerten Welle 2. Dabei ist das Lager 13 über Sicherungsringe an der Welle 2 und am Trägerelement 1 gesichert.

Bei der Herstellung der Gehäuseanordnung wird das Trägerelement 1 hergestellt, das dazu konfiguriert ist, die Welle 2 zu lagern. Außerdem wird das Gehäuse 14 mit dem Innengehäuse 3 und dem Außengehäuse 4 hergestellt, die durch die zumindest eine Verbindungsstrebe 5 miteinander verbunden werden. Anschließend wird das Innengehäuse 3 an dem Trägerelement 1 mittels der Presspassung 6 zwischen dem Innengehäuse 3 und dem Trägerelement 1 zentriert. Danach kann das Außengehäuse 4 mittels der Schraube 9 an dem Trägerelement 1 befestigt werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Trägerelement
- 2: Welle
- 3: Innengehäuse
- 4: Außengehäuse
- 5: Verbindungsstrebe
- 6: Presspassung
- 7: Bolzenflansch
- 8: Durchgangsloch
- 9: Schraube
- 10: O-Ring
- 11: Wellendichtung, Gleitringdichtung
- 12: Wellendichtung, Spaltdichtung
- 13: Lager
- 14: Gehäuse
- 15: Dichtungsaufnahme
- 16: Flansch des Trägerelements 1
- 17: erster Abschnitt des Trägerelements 1
- 18: zweiter Abschnitt des Trägerelements 1
- 19: Flansch des Innengehäuses 3
- 61: Presspassung

## Patentansprüche

1. Gehäuseanordnung für eine Strömungsmaschine, insbesondere Flugzeugtriebwerk, mit:
einem Trägerelement (1), das dazu konfiguriert ist, eine Welle (2) zu lagern;
einem Gehäuse (14), das am Trägerelement (1) zentriert ist; wobei
das Gehäuse (14) ein Innengehäuse (3) und ein am Trägerelement (1) befestigtes Außengehäuse (4) aufweist, die durch ein Verbindungsmittel, insbesondere zumindest eine Verbindungsstrebe (5), miteinander verbunden sind,
wobei
zwischen dem Trägerelement (1) und dem Innengehäuse (3) eine Presspassung (6) vorgesehen ist, um das Innengehäuse (3) an dem Trägerelement (1) zu zentrieren.

2. Gehäuseanordnung nach Anspruch 1,
wobei das Außengehäuse (4) einen Bolzenflansch (7) mit einem Durchgangsloch (8) zur Aufnahme einer Schraube (9) aufweist, durch die das Außengehäuse (4) an dem Trägerelement (1) befestigt ist, wobei das Durchgangsloch (8) an einer Position angeordnet ist, die sich bezogen auf eine Achse der Welle (2) radial außerhalb der Presspassung (6) befindet.

3. Gehäuseanordnung nach Anspruch 1 oder 2,
wobei das Trägerelement (1) eine äußere Mantelfläche hat und das Innengehäuse (3) eine innere Mantelfläche hat, zwischen denen die Presspassung (6) vorgesehen ist.

4. Gehäuseanordnung nach Anspruch 3,
wobei das Trägerelement (1) einen eine Achse der Welle (2) umlaufenden Flansch (16) aufweist, an dem die äußere Mantelfläche vorgesehen ist.

5. Gehäuseanordnung nach Anspruch 3 oder 4,
wobei das Innengehäuse (3) einen eine Achse der Welle (2) umlaufenden Flansch (19) aufweist, an dem die innere Mantelfläche vorgesehen ist.

6. Gehäuseanordnung nach einem der vorherigen Ansprüche,
wobei in einem Bereich der Presspassung (6) zwischen dem Trägerelement (1) und dem Innengehäuse (3) ein Dichtmittel, insbesondere ein O-Ring (10), zur Abdichtung zwischen dem Trägerelement (1) und dem Innengehäuse (3) angeordnet ist.

7. Gehäuseanordnung nach einem der vorherigen Ansprüche
wobei zwischen dem Innengehäuse (3) und der Welle (2) eine Wellendichtung (11, 12), insbesondere eine Labyrinthdichtung, angeordnet ist.

8. Gehäuseanordnung nach einem der vorherigen Ansprüche
wobei das Verbindungsmittel, insbesondere die zumindest eine Verbindungsstrebe (5), derart elastisch ist, dass sich das Innengehäuse (3) und das Außengehäuse (4) unterschiedlich thermisch ausdehnen können.

9. Gehäuseanordnung nach Anspruch 8, wobei das Verbindungsmittel im Verhältnis zu seiner Länge derart dünn ausgebildet ist, dass das Verbindungsmittel so elastisch ist, dass sich das Innengehäuse (3) und das Außengehäuse (4) unterschiedlich thermisch ausdehnen können.

10. Gehäuseanordnung nach Anspruch 8, wobei das Verbindungsmittel aus einem weichen, elastischen Material hergestellt ist, das so elastisch ist, dass sich das Innengehäuse (3) und das Außengehäuse (4) unterschiedlich thermisch ausdehnen können.

11. Strömungsmaschinenanordnung mit:
einer Gehäuseanordnung nach einem der vorherigen Ansprüche und der im Trägerelement (1) mittels eines Lagers (13) gelagerten Welle (2).

12. Verfahren zum Herstellen einer Gehäuseanordnung für eine Strömungsmaschine nach einem der vorherigen Ansprüche 1-10, mit den folgenden Schritten:
Herstellen eines Trägerelements (1), das dazu konfiguriert ist, eine Welle (2) zu lagern;
Herstellen eines Gehäuses (14) mit einem Innengehäuse (3) und einem Außengehäuse (4), die durch ein Verbindungsmittel, insbesondere zumindest eine Verbindungsstrebe (5), miteinander verbunden werden; und
Zentrieren des Innengehäuses (3) an dem Trägerelement (1) mittels einer Presspassung (6) zwischen dem Innengehäuse (3) und dem Trägerelement (1).

## Claims

1. A housing arrangement for a turbomachine, in particularan aircraft engine, comprising:
a support member (1) configured to support a shaft (2);
a housing (14) which is centered on the support member (1);
wherein the housing (14) has an inner housing (3) and an outer housing (4) fastened to the support member (1), said inner housing and said outer housing being connected to one another by a connecting means, in particular at least one connecting strut (5), wherein between the support member (1) and the inner housing (3) a press fit (6) is provided to center the inner housing (3) on the support member (1).

2. The housing arrangement according to claim 1, wherein the outer housing (4) has a bolt flange (7) with a through hole (8) for receiving a screw (9), through which the outer housing (4) is fastened to the support member (1), wherein the through hole (8) is arranged at a position which is located radially outside the press fit (6) with respect to an axis of the shaft (2).

3. The housing arrangement according to claim 1 or 2, wherein the support member (1) has an outer lateral surface and the inner housing (3) has an inner lateral surface, between which the press fit (6) is provided.

4. The housing arrangement according to claim 3, wherein the support member (1) has flange (16) surrounding an axis of the shaft (2), on which flange the outer lateral surface is provided.

5. The housing arrangement according to claim 3 or 4, wherein the inner housing (3) has a flange (19) surrounding an axis of the shaft (2), on which flange the inner lateral surface is provided.

6. The housing arrangement according to one of the preceding claims, wherein in a region of the press fit (6) between the support member (1) and the inner housing (3) a sealing means, in particular an O-ring (10) is arranged, to seal between the support member (1) and the inner housing (3).

7. The housing arrangement according to one of the preceding claims, where in a shaft seal (11, 12), in particular a labyrinth seal, is arranged between the inner housing (3) and the shaft (2).

8. The housing arrangement according to one of the preceding claims, wherein the connecting means, in particular the at least one connecting strut (5), is elastic such that the inner housing (3) and the outer housing (4) are able to expand differently thermally.

9. The housing arrangement according to claim 8, wherein the connecting means is so thin in relation to its length that the connecting means is elastic such that the inner housing (3) and the outer housing (4) are able to expand differently thermally.

10. The housing arrangement according to claim 8, wherein the connecting means is made of a soft, elastic material which is elastic such that the inner housing (3) and the outer housing (4) are able to expand differently thermally.

11. A turbomachine arrangement comprising:
a housing arrangement according to one of the preceding claims and the shaft (2) mounted in the support member (1) by means of a bearing (13).

12. A method for producing a housing arrangement for a turbomachine according to one of the preceding claims 1-10, comprising the following steps:
producing a support member (1) which is configured to support a shaft (2);
producing a housing (14) with an inner housing (3) and an outer housing (4), which are connected to one another by a connecting means, in particular at least one connecting strut (5); and
centering the inner housing (3) on the support member (1) by means of a press fit (6) between the inner housing (3) and the support member (1).

## Revendications

1. Agencement de carter d'une turbomachine, en particulier d'un moteur d'avion, comprenant :
un élément de support (1) configuré pour supporter un arbre (2) ;
un carter (14) qui est centré sur l'élément de support (1) ;
dans lequel le carter (14) comprend un carter intérieur (3) et un carter extérieur (4) fixé à l'élément de support (1), qui sont reliés par un moyen de liaison, en particulier au moins une entretoise de liaison (5), dans lequel un ajustement serré (6) est prévu entre l'élément de support (1) et le carter intérieur (3) afin de centrer le carter intérieur (3) sur l'élément de support (1).

2. Agencement de carter selon la revendication 1, dans lequel le carter extérieur (4) comporte une bride de boulon (7) doté d'un trou traversant (8) pour recevoir un boulon (9) à travers lequel le carter extérieur (4) est fixé à l'élément de support (1), dans lequel le trou traversant (8) est disposé à une position radialement à l'extérieur de l'ajustement serré (6) par rapport à un axe de l'arbre (2).

3. Agencement de carter selon la revendication 1 ou 2, dans lequel l'élément de support
(1) comporte une surface d'enveloppe extérieure et le carter intérieur (3) comporte une surface d'enveloppe intérieure entre lesquelles l'ajustement serré (6) est prévu.

4. Agencement de carter selon la revendication 3, dans lequel l'élément de support (1) comporte une bride (16) qui entoure un axe de l'arbre (2) et sur laquelle la surface d'enveloppe extérieure est prévue.

5. Agencement de carter selon la revendication 3 ou 4, dans lequel le carter intérieur (3) comporte une bride (19) qui entoure un axe de l'arbre (2) et sur laquelle la surface d'enveloppe intérieure est prévue.

6. Agencement de carter selon l'une des revendications précédentes, dans lequel, dans une zone de l'ajustement serré (6) entre l'élément de support (1) et le carter intérieur (3), un moyen d'étanchéité, en particulier un joint torique (10), est disposé pour assurer l'étanchéité entre l'élément de support (1) et le carter intérieur (3).

7. Agencement de carter selon l'une des revendications précédentes, dans lequel un joint d'arbre (11, 12), en particulier un joint à labyrinthe, est disposé entre le carter intérieur (3) et l'arbre (2).

8. Agencement de carter selon l'une des revendications précédentes, dans lequel le moyen de liaison, en particulier l'au moins une entretoise de liaison (5), est élastique de telle manière que le carter intérieur (3) et le carter extérieur (4) peuvent se dilater thermiquement de manière différente.

9. Agencement de carter selon la revendication 8, dans lequel le moyen de liaison est formé finement par rapport à sa longueur de telle manière que le moyen de liaison soit si élastique que le carter intérieur (3) et le carter extérieur (4) peuvent se dilater thermiquement de manière différente.

10. Agencement de carter selon la revendication 8, dans lequel le moyen de liaison est constitué d'un matériau souple et élastique qui est si élastique que le carter intérieur (3) et le carter extérieur (4) peuvent se dilater thermiquement de manière différente.

11. Agencement de turbomachine comprenant :
un agencement de carter selon l'une des revendications précédentes et l'arbre (2) supporté dans l'élément de support (1) au moyen d'un palier (13).

12. Procédé de fabrication d'un agencement de carter pour une turbomachine selon l'une des revendications précédentes 1 à 10, comprenant les étapes suivantes :
fabrication d'un élément de support (1) configuré pour supporter un arbre (2) ;
fabrication d'un carter(14) comprenant un carter intérieur (3) et un carter extérieur (4), qui sont reliés par un moyen de liaison, en particulier au moins une entretoise de liaison (5) ; et
centrage du carter intérieur (3) sur l'élément de support (1) au moyen d'un ajustement serré (6) entre le carter intérieur (3) et l'élément de support (1).
